# EUROPEAN PATENT SPECIFICATION

(11) **EP 0 743 003 B1**
(45) Date of publication and mention of the grant of the patent: **03.07.2002**
(21) Application number: 96200650.8
(22) Date of filing: 09.03.1996
(51) Int. Cl.: A21D 2/18, A23L 1/187, A23L 1/0522

(54) **A bakery product which can be eaten as a cookie or can be used to prepare sweet drinks or pudding-type desserts**
Bäckereiprodukt, das wie ein Keks essbar, oder zur Bereitung von Süssgetränken oder Puddingdesserts verwendbar ist
Produit de boulangerie consommable comme biscuit ou utilisable pour la préparation de boissons sucrées ou de desserts du type pudding

(30) Priority: 26.04.1995 IT MI950837
(43) Date of publication of application: 20.11.1996
(73) Proprietor: BARILLA ALIMENTARE S.P.A., 43100 Parma (IT)
(72) Inventor: De Albertis, Pietro, 35036 Montegrotto Terme, Padova (IT)
(74) Representative: Botti, Mario

(56) References cited:
- FR-A- 512 825
- FR-A- 973 062
- GB-A- 455 261
- US-A- 2 045 019
- DATABASE WPI Section Ch, Week 8402 Derwent Publications Ltd., London, GB; Class A97, AN 84-008074 XP002008743 & JP 58 201 946 A ( LOTTE KK) , 25 November 1983 & PATENT ABSTRACTS OF JAPAN vol. 008, no. 41 (C-211), 22 February 1984 & JP-A-58 201946 (LOTTE KK), 25 November 1983,
- PATENT ABSTRACTS OF JAPAN vol. 013, no. 451 (C-643), 11 October 1989 & JP-A-01 174322 (Q P CORP), 10 July 1989, & DATABASE WPI Section Ch, Week 8933 Derwent Publications Ltd., London, GB; Class D11, AN 89-238779 & JP 01 174 322 A (QP CRP) , 10 July 1989

## Description

The present invention relates in general to a bakery product soluble in tepid or boiling aqueous liquids.

In particular, the invention relates to a bakery product which can be eaten as it is or can be used to prepare instant sweet drinks or desserts of a consistency similar to that of puddings as a result of being dispersed in a tepid or hot aqueous liquid such as, for example, milk.

Cookies based on cereal flours, which can readily be dispersed in hot or tepid aqueous liquids, such as, for example, milk, have been known for some years in the field of infant foods and are used to supplement the milk fed to newborn babies by means of feeding bottles.

However, the dispersal of these cookies in tepid milk gives rise to a fairly coarse suspension with particles of a size larger than 1 mm average diameter. This suspension can easily be fed to nursing infants since the holes in the teats of the feeding bottles are large enough to allow even the coarsest particles to pass through. However, the drink which can be produced with soluble cookies for infants can certainly not satisfy the requirements of consumers past infancy since it is not very palatable because of its non-homogeneity and its pasty consistency.

As is well known, sweet drinks with suitable organoleptic properties can be prepared by dispersing powdery preparations known by the English term "instant drinks" and based essentially on sugar and cocoa, in hot or tepid liquids, particularly milk or water.

Powdery products for preparing pudding-like desserts which contain gelling agents of the carrageenan family and are dispersed in an aqueous liquid, generally milk, the resulting mixture then being brought to the boil and allowed to cool, are also known.

JP 58 201 946 describes a product which is a combination of biscuit and chewing gum. The biscuit comprises about 43% starch and about 30% disaccharides.

JP 01 174 322 discloses a bakery food like BORO (Japanese cake) which is made of a starchy raw material, sugars and milk.

None of these documents however describes a bakery product which can be dispersed in tepid or boiling water.

The problem underlying the present invention is that of providing a multi-purpose product which can be eaten directly as a cookies and which can also produce a drink with organoleptic properties comparable with those of "instant drinks" and pudding-type desserts.

This problem is solved, according to the invention, by a bakery product comprising, as percentages by weight of the total dry weight, 20-62% starch and 13-45% mono- and disaccharides.

Preferably, the bakery product according to the invention is free of cereal flour and also comprises 8-20% edible fats.

The bakery product preferably also contains 1-5% soya flour.

According to a preferred embodiment of the invention, the bakery product also contains 5-13% cocoa and 3-8% chocolate.

The edible fats are preferably selected from the group comprising butter, margarine and mixtures thereof.

Starches particularly suitable for the purposes of the invention are maize and wheat starches.

The percentages given in the present description and in the claims are intended as percentages by weight of the total dry weight unless otherwise specified.

The bakery product according to the invention has excellent organoleptic properties which can be appreciated both when it is eaten as a cookie and by tasting the drinks and puddings which can be prepared therefrom.

When eaten as a cookie, the bakery product according to the invention tends to dissolve in the mouth, producing a taste similar to that obtained when a chocolate is dissolved in the mouth.

The sweet drinks prepared by dispersing the bakery product of the invention in tepid or hot milk or the like are perfectly homogeneous, without granules, smooth and of a particularly rounded flavour.

The "solubility" of the bakery product according to the invention is such that the sweet drinks which can be produced therefrom by dispersing one part by weight of the bakery product in 10 parts by weight of water at 40°C and stirring in a beaker by means of a magnetic stirrer at a speed of 120 revolutions/minute for 120 second leave a maximum residue of 20% by weight of the total weight of the bakery product after passing through a mesh with a mesh size of 1000 microns.

Under the same conditions, the above-mentioned infants' cookies which can be dispersed leave a residue of about 90%.

In order to prepare a sweet drink from the bakery product according to the invention, typically, 1 part by weight of the product is dispersed in about 6 parts by weight of tepid or hot liquid, generally milk, (at a temperature greater than or equal to 40°C).

If the drink is heated with stirring (for example, with a spoon) until it thickens (at about 70°C) a preparation similar to drinking chocolate is obtained.

It is important to underline that the sweet drinks prepared with the bakery product according to the invention provide a more balanced nutritional contribution than the "instant drinks" of the prior art, by virtue of their content of complex carbohydrates.

When the bakery product according to the invention also contains edible fats, particularly butter, the sweet drinks prepared therefrom have better organoleptic properties than can be achieved by "instant drinks", being characterized by a more "rounded" flavour and a smooth consistency, which characteristics are further enhanced when the formulation of the bakery product also comprises soya flour which promotes the homogeneity of the drink by virtue of its emulsifying effect.

The pudding-type desserts which can be produced by dispersing the bakery product according to the invention in milk or the like, bringing it to the boil and then allowing it to cool to ambient temperature or to refrigerator temperature have a consistent and smooth structure and, unlike those of the prior art based on carrageenans, do not have a shiny appearance upon cutting and have less synaeresis in comparison therewith.

Upon tasting, they do not give the "watery" taste typical of carrageenan-based preparations.

These desserts are prepared, for example, by dispersing 1 part by weight of the bakery product in about 5 parts by weight of tepid liquid, for example, milk and heating it with simultaneous stirring (for example, with a spoon or a wooden spoon) until the resulting mixture thickens (at a temperature of about 70°C). Preparation is completed by heating and stirring for a further minute and allowing the mixture to cool to ambient temperature or in a refrigerator.

As well as the organoleptic advantages pointed out above, in comparison with the carrageenan-based preparations of the prior art, desserts prepared from the bakery product according to the invention also have advantages from a nutritional point of view, owing to their content of complex carbohydrates.

Finally, it is worth underlining the multi-purpose nature and versatility of the bakery product according to the invention which is suitable for three different uses, that is, to be eaten as a cookie and for the preparation of sweet drinks or for pudding-type desserts, showing optimal performance from an organoleptic point of view in each of these uses.

The bakery product can easily be flavoured in many ways according to the tastes of the consumers for whom it is intended. Flavouring can be achieved by the addition of ingredients having both flavouring and nutritional value such as, for example, cocoa and chocolate, or by the addition of flavourings, preferably natural flavourings such as, for example, vanilla, cinnamon and fruit flavourings.

Further characteristics and advantages of the bakery product according to the invention will become clear from some examples given below.

### EXAMPLE 1

26.0 kg of icing sugar, 14.0 kg of butter and 7.0 kg of glucose syrup were mixed at high speed in a planetary mixer for about 5 minutes producing a mixture of a creamy consistency.

1.3 kg of ammonium bicarbonate and 0.3 kg of sodium chloride were added to the mixture and it was mixed at high speed for about 3 minutes, after which 33.0 kg of maize starch, 2.2 kg of soya flour, 10.0 kg of cocoa powder and 6.0 kg of powdered chocolate were added.

After the mixture thus obtained had been mixed at low speed for about 3 minutes with a quantity of water sufficient to produce a mouldable dough, the dough produced was sent on to a moulding step similar to those to which cookie doughs are conventionally subjected in a rotary moulding machine, and was then baked in an oven at a temperature of 200°C for 8 minutes.

The bakery product thus produced was just like a conventional cookie of the "frollini" type in shape, consistency and friability.

The "solubility" of the bakery product produced was checked by dispersing 1 part by weight thereof in 10 parts by weight of water at 40°C in a 70 ml beaker, stirring for 120 seconds with a magnetic stirrer (with a 35mm x 7mm stirring element) at a speed of 120 revolutions/minute and passing the dispersion obtained through a mesh with a mesh size of 1000 microns. No residue remained on the mesh.

After the dispersion had been passed through a mesh with a mesh size of 250 microns, a residue of 6% of the total weight of the bakery product remained on the mesh.

### EXAMPLE 2

5.0 kg of icing sugar, 20.0 kg of butter and 8.0 kg of glucose syrup were mixed at high speed in a planetary mixer for about 5 minutes, producing a mixture of a creamy consistency.

3.1 kg of ammonium bicarbonate and 0.4 kg of sodium chloride previously dispersed in water were added to this mixture and it was mixed at high speed for about 3 minutes, after which 39.7 kg of maize starch, 2.8 kg of soya flour, 13.0 kg of cocoa powder and 8.0 kg of powdered chocolate were added.

After the mixture thus produced had been mixed at low speed for about 3 minutes with a quantity of water sufficient to produce a mouldable dough, the dough produced was sent on to a moulding step similar to those to which cookie doughs are conventionally subjected in a rotary moulding machine and was then baked in an oven at a temperature of 210°C for 5 minutes.

### EXAMPLE 3

37.0 kg of icing sugar, 12.2 kg of butter and 8.0 kg of glucose syrup were mixed at high speed in a planetary mixer for about 5 minutes, producing a mixture of a creamy consistency.

2.0 kg of ammonium bicarbonate and 0.2 kg of sodium chloride previously dispersed in water were added to the mixture and it was mixed at high speed for about 3 minutes, after which 25.4 kg of maize starch, 1.8 kg of soya flour, 8.2 kg of cocoa powder and 5.2 kg of powdered chocolate were added.

After the mixture thus produced had been mixed at low speed for about 3 minutes with a quantity of water sufficient to produce a mouldable dough, the dough produced was sent on to a moulding step similar to those to which cookie doughs are conventionally subjected in a rotary moulding machine and was then baked in an oven at a temperature of 190°C for 10 minutes.

### EXAMPLE 4

14.0 kg of icing sugar, 8.0 kg of butter and 4.0 kg of glucose syrup were mixed at high speed in a planetary mixer for about 5 minutes, producing a mixture of a creamy consistency.

1.3 kg of ammonium bicarbonate and 0.2 kg of sodium chloride previously dispersed in water were added to the mixture and it was then mixed at high speed for about 3 minutes, after which 62.0 kg of maize starch, 1.3 kg of soya flour, 5.7 kg of cocoa powder and 3.5 kg of powdered chocolate were added.

After the mixture thus produced had been mixed at low speed for about 3 minutes with a quantity of water sufficient to produce a mouldable dough, the dough produced was sent on to a moulding step similar to those to which cookie doughs are conventionally subjected in a rotary moulding machine and was then baked in an oven at a temperature of 200°C for 9 minutes.

### EXAMPLE 5

30.0 kg of icing sugar, 17.1 kg of butter and 8.1 kg of glucose syrup were mixed at high speed in a planetary mixer for about 5 minutes, producing a mixture of a creamy consistency.

2.8 kg of ammonium bicarbonate and 0.4 kg of sodium chloride previously dispersed in water were added to the mixture and it was mixed at high speed for about 3 minutes, after which 20.0 kg of maize starch, 2.6 kg of soya flour, 11.6 kg of cocoa powder, and 7.4 kg of powdered chocolate were added.

After the mixture thus produced had been mixed at low speed for about 3 minutes with a quantity of water sufficient to produce a mouldable dough, the dough produced was sent on to a moulding step similar to those to which cookie doughs are conventionally subjected in a rotary moulding machine and was then baked in an oven at a temperature of 200°C for 7 minutes.

### EXAMPLE 6

30.1 kg of icing sugar, 17.1 kg of butter and 8.2 kg of glucose syrup were mixed at high speed in a planetary mixer for about 5 minutes, producing a mixture of a creamy consistency.

2.8 kg of ammonium bicarbonate, 0.3 kg of sodium chloride and 0.1 kg of vanilla flavouring were added to the mixture and it was mixed at high speed for about 3 minutes, after which 38.7 kg of maize starch and 2.7 kg of soya flour were added.

After the mixture thus produced had been mixed at low speed for about 3 minutes with a quantity of water sufficient to produce a mouldable dough, the dough produced was sent on to a moulding step similar to those to which cookie doughs are conventionally subjected in a rotary moulding machine and was then baked in an oven at a temperature of 200°C for 6 minutes.

## Claims

1. A bakery product for consumption as a cookie or in the form of a drink or a pudding produced by dispersing it in tepid to boiling aqueous liquids, **characterized in that** it comprises, as percentages by weight of the total dry weight, 20-62% starch and 13-45% mono- and disaccharides.

2. A bakery product for consumption as a cookie or in the form of a drink or a pudding produced by dispersing it in tepid to boiling aqueous liquids, **characterized in that** it is free of cereal flours and comprises, as percentages by weight of its total dry weight, 20-62% starch and 13-45% mono- and disaccharides.

3. A bakery product according to Claim 2, **characterized in that** it further comprises 8-20% edible fats.

4. A bakery product according to Claim 3, **characterized in that** it further comprises 1-5% soya flour.

5. A bakery product according to Claim 4, **characterized in that** it further comprises 5-13% cocoa and 3-8% chocolate.

6. A bakery product according to any one of Claims 3 to 5, **characterized in that** the edible fats are selected from the group comprising butter, vegetable margarine and mixtures thereof.

7. A bakery product according to any one of Claims 2 to 6, **characterized in that** the starch is maize or wheat starch.

## Patentansprüche

1. Bäckereiprodukt zum Verzehr als Keks oder in Form eines Drinks oder eines Nachtischs hergestellt durch seine Auflösung in lauwarmen bis kochenden wässrigen Flüssigkeiten, **dadurch gekennzeichnet, daß** es 20-62% Stärke und 13-45% Mono- und Disaccharide, ausgedrückt als Gewichtsprozente des Gesamt-Trockengewichts, umfaßt.

2. Bäckereiprodukt zum Verzehr als Keks oder in Form eines Drinks oder eines Nachtischs hergestellt durch seine Auflösung in lauwarmen bis kochenden wässrigen Flüssigkeiten, **dadurch gekennzeichnet, daß** es frei von Getreidemehl ist und 20-62% Stärke und 13-45% Mono- und Disaccharide, ausgedrückt als Gewichtsprozente seines Gesamt-Trockengewichts, umfaßt.

3. Bäckereiprodukt nach Anspruch 2, **dadurch gekennzeichnet, daß** es weiter 8-20% eßbare Fette enthält.

4. Bäckereiprodukt nach Anspruch 3, **dadurch gekennzeichnet, daß** es weiter 1-5% Sojamehl enthält.

5. Bäckereiprodukt nach Anspruch 4, **dadurch gekennzeichnet, daß** es weiter 5-13% Kakao und 3-8% Schokolade enthält.

6. Bäckereiprodukt nach einem der Ansprüche 3 bis 5, **dadurch gekennzeichnet, daß** die eßbaren Fette ausgewählt sind aus der Gruppe bestehend aus Butter, Pflanzenmargarine und Mischungen davon.

7. Bäckereiprodukt nach einem der Ansprüche 2 bis 6, **dadurch gekennzeichnet, daß** die Stärke Mais- oder Weizenstärke ist.

## Revendications

1. Un produit de boulangerie pour consommation comme biscuit ou sous forme d'une boisson ou d'un pudding produits en le dispersant dans des liquides aqueux tièdes à bouillants, **caractérisé en ce qu'**il comprend, en pourcentages pondéraux du poids total sec, 20 à 62 % d'amidon et 13 à 45 % de mono et disaccharides.

2. Un produit de boulangerie pour consommation comme biscuit ou sous forme d'une boisson ou d'un pudding produits en le dispersant dans des liquides aqueux tièdes à bouillants, **caractérisé en ce qu'**il est dépourvu de farines céréalières et comprend, en pourcentages pondéraux de son poids total sec, 20 à 62 % d'amidon et 13 à 45 % de mono et disaccharides.

3. Un produit de boulangerie selon la revendication 2, **caractérisé en ce qu'**il comprend en outre 8 à 20 % de matières grasses comestibles.

4. Un produit de boulangerie selon la revendication 3, **caractérisé en ce qu'**il comprend en outre 1 à 5 % de farine de soja.

5. Un produit de boulangerie selon la revendication 4, **caractérisé en ce qu'**il comprend en outre 5 à 13 % de cacao et 3 à 8 % de chocolat.

6. Un produit de boulangerie selon l'une des revendications 3 à 5, **caractérisé en ce que** les matières grasses comestibles sont choisies dans le groupe comprenant le beurre, la margarine végétale et les mélanges de ceux-ci.

7. Un produit de boulangerie selon l'une des revendications 2 à 5, **caractérisé en ce que** l'amidon est l'amidon de maïs ou de blé.
